# EUROPEAN PATENT SPECIFICATION

(11) **EP 3 350 751 B1**
(45) Date of publication and mention of the grant of the patent: **29.10.2025**
(21) Application number: 16770428.7
(22) Date of filing: 15.09.2016
(51) Int. Cl.: G06K 19/077, G06K 19/07

(54) **RFID TAG WITH ANTI-TAMPER ASSEMBLY**
RFID-ETIKETT MIT MANIPULATIONSSICHERER ANORDNUNG
ÉTIQUETTE RFID AVEC ENSEMBLE INVIOLABLE

(30) Priority: 15.09.2015 US 201514854093
(43) Date of publication of application: 25.07.2018
(73) Proprietor: Avery Dennison Retail Information Services LLC, Mentor, OH 44060 (US)
(72) Inventor: FORSTER, Ian J., Chelmsford Essex CM1 6LA (GB)
(74) Representative: Müller-Boré & Partner Patentanwälte PartG mbB
(86) International application number: PCT/US2016/051805
(87) International publication number: WO 2017/048885

(56) References cited:
- DE-A1- 10 012 204
- DE-A1- 102009 005 100
- DE-A1- 102011 050 196
- DE-A1- 102012 211 188
- DE-A1- 19 720 747
- US-A1- 2002 188 259
- US-A1- 2005 012 616
- US-A1- 2009 141 767
- US-A1- 2012 092 027
- US-A1- 2012 218 110
- US-A1- 2014 022 058
- US-A1- 2014 062 787
- US-A1- 2014 263 659
- US-B1- 7 304 578

## Description

### BACKGROUND

The present invention relates generally to a strap comprising multiple pads. Specifically, the pads combine a connection to an RFID antenna and a sensing component into the same structure. In accordance with embodiments of the present subject matter, the strap is a multi-port strap. Accordingly, the present specification makes specific reference thereto.

The use of radio frequency identification (RFID) to identify one of a plurality of items is well known. Typical RFID tags or integrated circuits include a microprocessor, also known as a microchip, electrically connected to an antenna. Alternatively, the microchip is first attached to a pad having electrical leads that provides a larger attachment or "landing" area. This is typically referred to as a "strap" or "interposer." The strap is then attached to the antenna. Specifically, interposers include conductive leads or pads that are electrically coupled to the contact pads of the chips for coupling to the pads on the antennas, whereupon the area of coupling is sufficient to provide efficient coupling at UHF (ultra high frequency) frequencies.

However, it is sometimes desirable to use an alternative chip with more than one port. The chip would comprise a first port for coupling to the antenna and a secondary port. This secondary port can be configured to perform a number of functions, such as determining the open or closed circuit state. Further, determination of the connection state of the secondary port is determined by a low frequency pulse, which does not couple efficiently via the capacitance that couples the UHF connection to the antenna.

Furthermore, the microprocessor within the RFID tags stores data, which can include identifying data unique to a specific item, which is transmitted to an external receiver (interrogator) for reading by an operator and processing of the item. The microprocessor also modulates a radio frequency (RF) signal that is transmitted via the antenna. The external reader (interrogator) is used to capture the data transmitted by the RFID tag. RFID tags can be attached to or associated with items, consumer or luxury goods, apparel or garments, consumable products such as food for inventory control, shipment control, loss prevention, and the like.

US 2014 062 787 A1 relates to a device for use with a radio frequency identification (RFID) chip that receives and modulates a radio frequency (RF) signal. A substrate of the device includes a first short dipole antenna structure that backscatters a received RF signal to produce a first radiation pattern having nulls. A set of connection pads couple the RF signal from the antenna to a frontend transmitter circuit of the RFID chip. A second antenna structure backscatters the received RF signal by electromagnetic coupling to the first antenna structure and produces a second radiation pattern that complements the nulls in the first radiation pattern.

US 2005 012 616 A1 relates to an RFID device including a first, relatively permanent portion and a second alterable or inactivatable portion. Upon the occurrence of some predetermined event, the second portion and/or its coupling to the first portion is physically altered, inactivating it. The first portion may itself be an antennaless RFID device that may be read at short range, and the second portion may be an antenna that, when coupled to the first portion, substantially increases the range at which the first portion may be read. The second portion may be configured to be altered or inactivated by any of a variety of predetermined events, such as involving physical, chemical or electrical forces, performed either on the RFID device, or upon an object to which the RFID device is coupled.

DE 197 20 747 A1 relates to security element containing a unit of an electron-ic miniature circuit and an electric coil, forming a transponder, which are electrically connected with each other, and which are arranged on or in a common carrier. The transponder can be connected to its identification with an external reading device. The carrier comprises at least one breakage area, at whose breaking the electric connection between circuit and coil is permanently interrupted. The transponder may be a read-only or a read/write transponder. An additional identification element, preferably in form of a bar-code print is preferably provided on the carrier.

US 2002/0188259 A1 relates to capital equipment units, such as systems for providing medical treatment, that are associated with smart supplies. The smart supplies are tagged with data carriers which may encode such information as a unique ID for the supply or component, the identification of the supply or component, the identification of the source of the supply or component, the status of whether said supply or component has been previously used, the expiration date of the supply or component, and in the case where the supply or component contains drug, the purity levels of the drug and the concentration levels of the drug. The capital equipment units or their users then utilize the information to assure quality of any procedure run with the units, by way of improved pre-use checks, certification of the supplies for use, record keeping, inventory control, and charge capture.

US 2014/0263659 A1 relates to sewable tamper detection elements for radio frequency identification devices, and to radio frequency identification devices with such tamper detection elements. The devices can be sewn into a seam of a garment so that the tamper detection element is partially inside the garment, e.g. as part of a care label. This makes removing the device difficult without breaking the tamper detection element, and thereby shoplifting attempts can be more reliably noticed. For this purpose, the tamper detection element is formed so that sewing through it does not break the element. The radio frequency identification device may be formed asymmetric so that the tamper detection element is on a different side from the antenna elements with respect to the chip. In this manner, the disturbance from the tamper detection element to the antenna can be minimized. The tamper detection element may be formed so that it contains a transparent opening on which text can be printed.

US 2012/0218110 A1 relates to an apparatus, system and method for forming RFID labels. The RFID labels can include an RFID chip, at least one antenna element and at least one conductive material. The RFID chip may then transmit desired signals based upon a coupling of the conductive material to the RFID chip.

DE 10 2012 211 188 A1 relates to an arrangement with an RFID transponder for contactless monitoring of electrical and mechanical states. Especially for monitoring the position of an object or a mechanical component.

US 2014/022058 A1 describes a sensor system which comprises a tag. The tag comprises at least one radio-frequency chip and a first antenna. The chip comprises a memory element, the memory element comprising electrical storage of a binary coded word comprising at least one bit, and output terminals. The tag further comprises at least one conductive polymeric system disposed in electrical communication with at least one output terminal of the chip and adapted to change electrical state in association with a predetermined change in an environment of the conductive polymeric system. The first antenna is disposed in electrical communication with the output terminal(s) of the chip and the conductive polymeric system.

DE 10 2009 005 100 relates to a device with a sensor element, wherein a condition of the sensor element is varied based on physical or chemical reaction on the material. An antenna arrangement decouples a signal from the device, where level of the signal is based on the condition. The sensor element is coupled with the antenna arrangement such that an impedance of the antenna arrangement is based on the condition. The sensor element is designed such that the signal is modulated based on the condition. Independent claims are also included for the following: a transponder tag and a method for determining condition of a transponder device.

US 2009/141767 A1 describes a single chip wireless sensor which comprises a microcontroller connected to a transmit/receive interface, which is coupled to a wireless antenna by an L-C matching circuit. The sensor senses gas or humidity and temperature. The device is an integrated chip manufactured in a single process in which both the electronics and sensor components are manufactured using standard CMOS processing techniques, applied to achieve both electronic and sensing components in an integrated process. A Low-K material with an organic polymer component is spun onto the wafer to form a top layer incorporating also sensing electrodes. This material is cured at 300° C., which is much lower than CVD temperatures. The polyimide when cured becomes thermoset, and the lower mass-to-volume ratio resulting in K, its dielectric constant, reducing to 2.9. The thermoset dielectric, while not regarded as porous in the conventional sense, has sufficient free space volume to admit enough gas or humidity for sensing.

Thus, according to an aspect, the problem relates to providing a multi-port strap for an RFID device allowing an improved tampering detection function.

This problem is solved by the subject-matter of the independent claim 1. Preferred embodiments are defined in the dependent claims.

Further, a multi-port strap is disclosed comprising an RFID antenna and a sensing component. Specifically, the strap has a UHF port for coupling to an antenna and a secondary port. An extended area connected to the secondary port functions as an anti-tamper area, wherein a change of state indicates that the label has been cut out of the garment.

### SUMMARY

In one example, the secondary port, initially in a closed circuit state due to the structure of the strap, becomes an open circuit when the secondary port is cut, torn, or in any other way broken. Thus, this change of state can be associated with a printed fabric label in a garment, food freshness label, or other tag or label, including those situations where the elements of the tag or label are created on an apparel item such as through a heat transfer process and the structure of the RFID tag is applied over the heat transfer area, where the state change indicates that the label, tag or heat transfer has been cut out of the garment. Further, in another example, the secondary port is initially in an open circuit state and a material responsive to a sensed state can make it short circuit. Alternatively, in another example, the conductors of the secondary port may be given access to an external environment and change state in response to the presence of an environmental factor, such as moisture.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

### BRIEF DESCRIPTION OF THE DRAWINGS

FIG. 1 illustrates a top view of the multi-port strap device in accordance with the disclosed architecture.
FIG. 2 illustrates a top view of the multi-port device showing the area where a transverse cut or other break will change the state of the secondary port in accordance with the disclosed architecture.
FIG. 3 illustrates a top view of an example of the multi-port device wherein the secondary port is initially in an open circuit state in accordance with the disclosed architecture.
FIG. 3A illustrates a top view of the multi-port device showing how the strap is suitable for sewing into a garment in accordance with the disclosed architecture.
FIG. 4 illustrates a top view of the multi-port device with an UHF antenna showing how cutting the extended area would change the secondary port state in accordance with the disclosed architecture.
FIG. 5 illustrates a top view of the multi-port device showing that the extended strap prevents a cut through the anti-tamper area from damaging the UHF antenna in accordance with the disclosed architecture.
FIG. 6 illustrates a top view of an alternative structure of the multi-port device wherein the RFID chip detects the port state with a relatively low frequency pulse in accordance with the disclosed architecture.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

The present description discloses a multi-port strap device having multiple pads that can combine a connection to an RFID antenna and a sensing function, such as an open or closed circuit state, into the same structure.

Straps carrying RFID chips are known in the art. For example, the pads of the strap can couple reactively to the pads on the antenna, whereupon the area of coupling is sufficient to provide efficient coupling at UHF (ultra high frequency) frequencies. However, it is sometimes desirable to use an alternative chip with more than one port; an example of this is the G2iL+ by NXP^{®} semiconductors. This chip has a UHF port for coupling to an antenna and a secondary port. This secondary port can be configured to perform a number of different functions, one of which is to determine the open or closed circuit state of the chip. In this context, an open circuit is defined as having a resistance greater than a pre-defined value and a closed circuit is defined as having a resistance lower than the pre-defined value. The determination of the connection state of the port is then determined by a low frequency pulse, which does not couple efficiently via the capacitance that couples the UHF connection to the antenna.

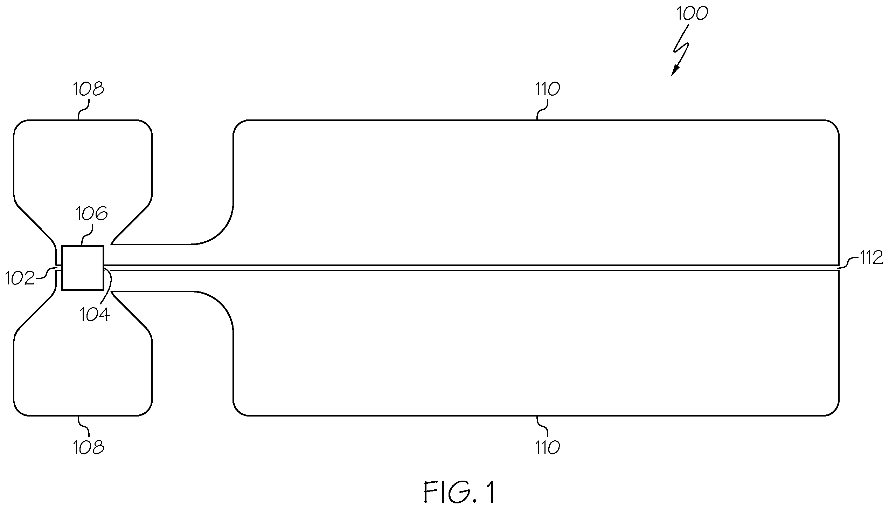

Referring initially to the drawings, FIG. 1 illustrates a first example of a strap device 100 comprising two ports, a first port 102 and a secondary port 104. Specifically, the strap device 100 comprises a chip 106 and is coupled to a conductor structure, such as an antenna. Coupling between the antenna and strap device 100 may be a direct, conductive coupling or may be an indirect coupling, such as a capacitive or inductive coupling or any combination of conductive, capacitive and inductive coupling. The strap device 100 also comprises UHF (ultra high frequency) pads 108 on either side of the first port 102 for coupling to the antenna. Further, the strap device 100 comprises an extended area connected to the secondary port 104, such as extended port pads 110 coupled to the secondary port 104.

This extended area (i.e., extended port pads 110) can perform functions such as anti-tamper functions, wherein the secondary port 104, initially in a closed circuit state due to the structure of the strap device 100, becomes an open circuit when the extended port pads 110 of the secondary port 104 area are cut, torn or in any other way broken. Specifically, the secondary port 104 is an open/short circuit sensing port on the chip 106, such that when a user opens or shorts the circuit at the short circuit point 112, a change of state occurs. Accordingly, the secondary port 104, initially in a closed circuit state due to the structure of the strap device 100, becomes an open circuit (or short circuit) when the secondary port 104 is cut, torn, or in any other way broken. Thus, this change of state can be associated with a printed fabric label in a garment, or other tag or label provided on an apparel item, consumer good, food product or where the label or tag is created via a heat transfer product directly on the item where the state change indicates that the label has been cut out of the garment.

The strap device 100 structure can be any suitable size, shape, and configuration as is known in the art without affecting the overall concept of the invention. One of ordinary skill in the art will appreciate that the shape and size of the strap structure as shown in FIG. 1 is for illustrative purposes only and many other shapes and sizes of the strap structure are well within the scope of the present disclosure. Although dimensions of the strap structure (i.e., length, width, and height) are important design parameters for good performance, the strap structure may be any shape or size that ensures optimal performance and sensitivity during use.

The strap device 100 is coupled to an antenna, wherein the antenna structure can be any of a variety of materials, for example aluminum, copper, silver or another thin, conductive material, for example etched or hot-stamped metal foil, or any other suitable material as is known in the art, such as conductive ink which can be printed to make a suitable antenna. The antenna structure further comprises at least two conductor pads, or any suitable number of conductor pads as is known in the art.

Furthermore, FIG. 1 shows the strap device 100 with a first UHF port 102 and a secondary port 104 which can set a bit in the chip's 106 memory associated with the open/closed circuit state of the secondary port 104 as previously described. The detection or secondary port 104 is larger than the first or UHF antenna coupling port 102 to extend the area that a change in state can be detected over.

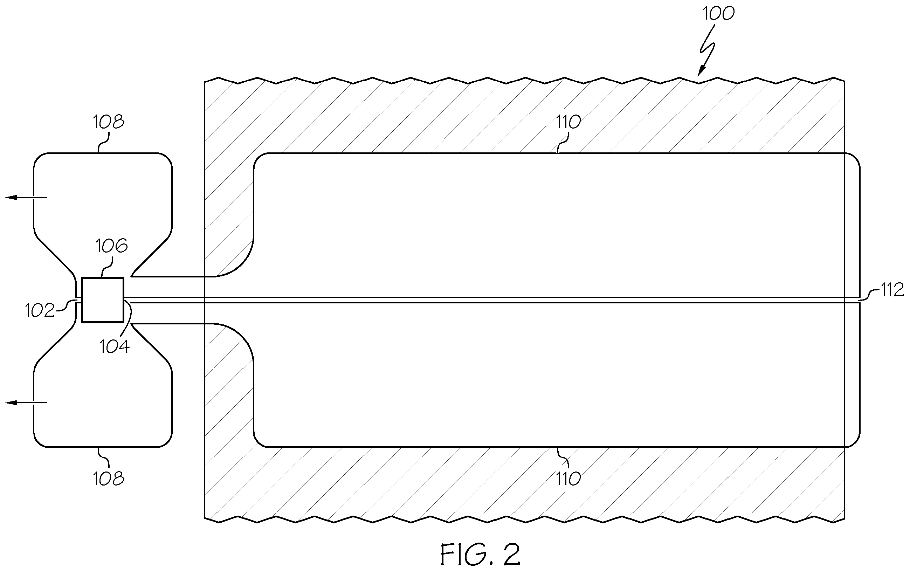

FIG. 2 discloses the strap device 100 and the extended area (i.e., extended port pads 110) across which a transverse cut or other break will change the state of the secondary port 104.

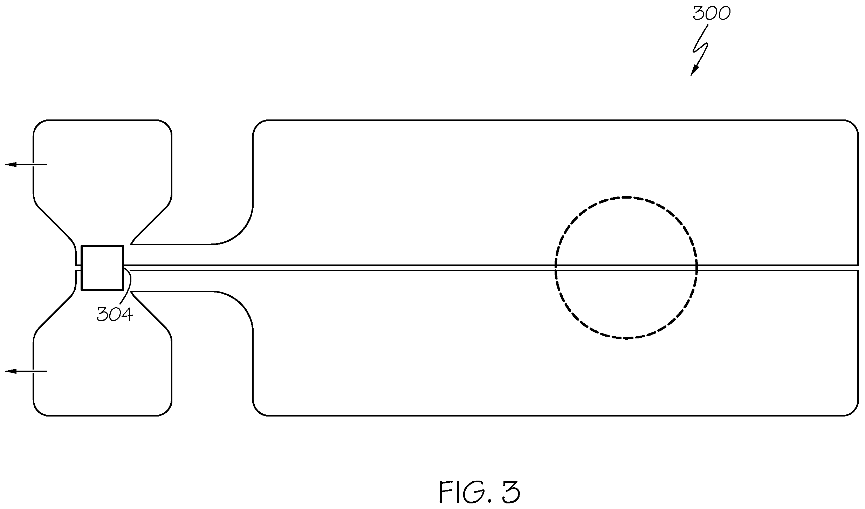

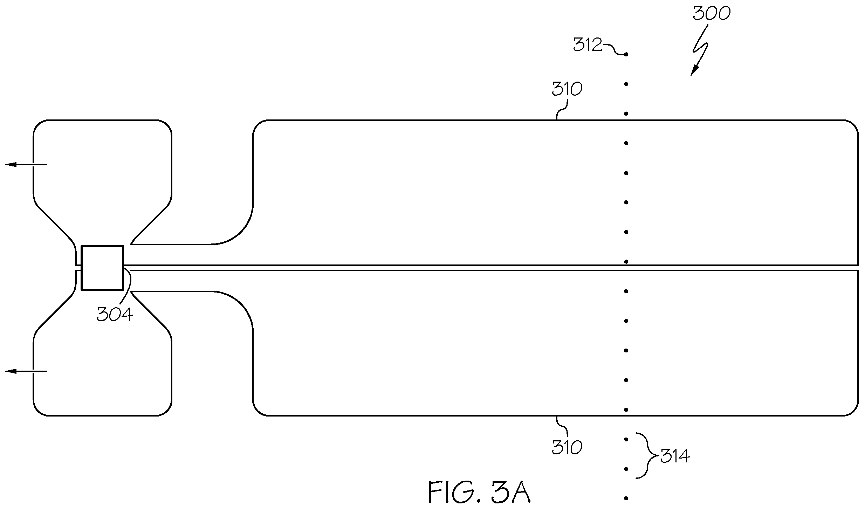

FIG. 3 discloses an alternative example wherein the secondary port 304 of the strap device 300 is initially an open circuit and a material responsive to a sensed state can make the secondary port 304 short circuit. Specifically, the material used changes resistance in response to an environmental condition, and the resistance, if it is above the open / short circuit threshold, maintains the initial open circuit state, but if it is below creates the short circuit state. The change of resistance can be associated with an environmental factor that can be sensed through a protective layer designed to protect the antenna and strap, such as a film which can be a suitable plastic in one embodiment. The protective layer can protect the antenna and strap from changes in temperature or light. Alternatively, the conductors of the secondary port 304 can be given access to an external environment through an aperture in the protective layer. The presence of a conductive material in contact with the strap allows the secondary port 304 to change state in response to the presence of an environmental factor such as a conductive liquid, water.

FIG. 3A discloses another feature of the strap device 300, wherein the relatively wide conductors of the strap device 300 stop the conductive path from being broken when a label carrying the tag is sewn into a garment. For example, the punctures 312 created by a sewing needle and line of stitches 314 to attach the tag to a garment are shown in FIG. 3A. The wide areas of the extended port pads 310 prevent the sewing of the tag into the garment to change the secondary 304 port state. The needle performing the sewing punches a series of holes for the stitches to pass through, at intervals. In one embodiment, for instance, the holes are approximately 1mm diameter at a spacing of 2mm a part. A thin line / pad, below 1mm, can be cut by the needle prematurely changing the state of the port. By using wide pads, no combination of holes, regardless of how they are registered to the pads, can prematurely change the state from closed circuit to an open circuit.

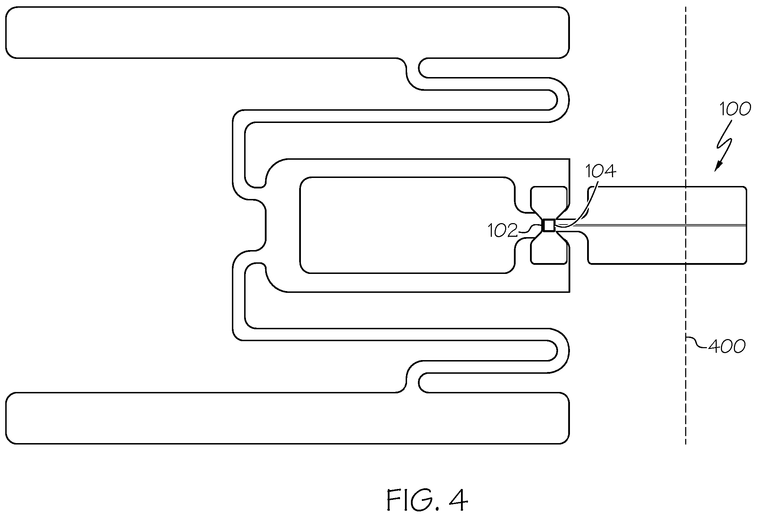

FIG. 4 discloses an example of a strap device 100 (i.e., tag) showing a line 400 where a label would commonly be removed or separated from a garment by cutting, wherein this cutting would change the secondary port 104 state, allowing the tag to perform anti-tamper functions. FIG. 4 also discloses the UHF antenna 402 coupled to the first port 102.

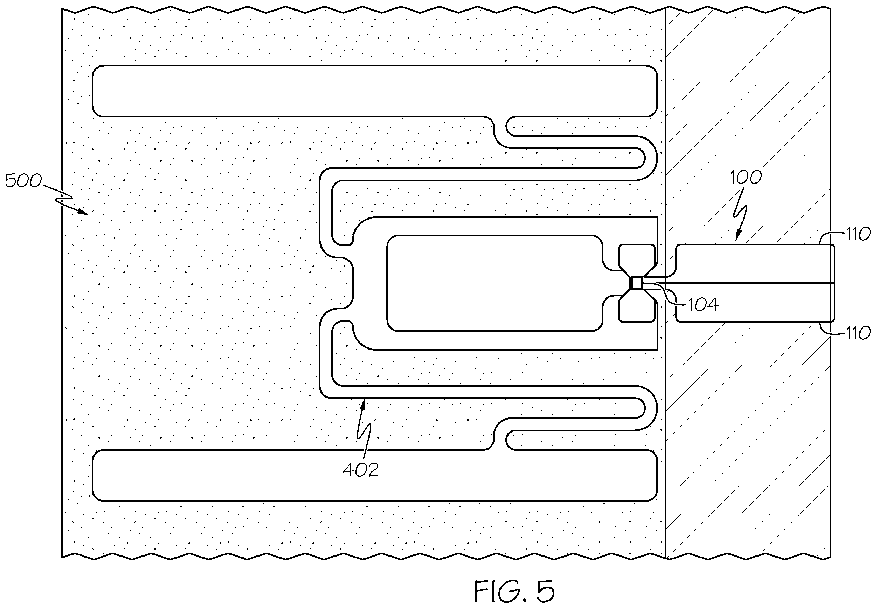

FIG. 5 discloses a feature of the extended strap device 100 and its associated antenna design, wherein the extended area (i.e., extended port pads 110) designed to function as the anti-tamper secondary port 104 is separate from the UHF antenna area 500, such that a cut through the anti-tamper secondary port 104 and/or extended port pads 110 does not damage or disable the UHF antenna 402. This allows the bit state to still be read remotely. Thus, the extended area (i.e., extended port pads 110) prevents cuts from damaging the UHF antenna 402, wherein a cut within the UHF antenna area 500 would reduce read range. However, a transverse cut in the anti-tamper region, extended area (i.e., extended port pads 110) changes state in the secondary port 104.

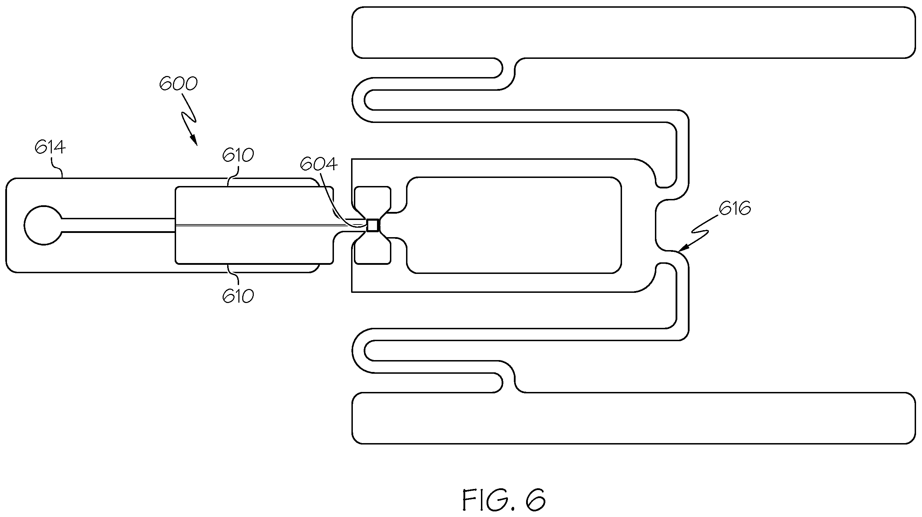

FIG. 6 discloses an alternative embodiment wherein the strap device 600 is designed to work with an RFID chip that detects the secondary port 604 state with a relatively low frequency pulse, for example one lasting 100nS. The extended area 610 of the secondary port 604 comprises large pads (i.e., a large coupling area) which are an open circuit, and the large pads couple to an anti-tamper/sensing structure 614 (i.e., an extended metal area formed as part of the UHF antenna 616) formed as part of the antenna process. Due to the large area of coupling from the large pads, the pulse can pass through the capacitive joints and determine the open/short circuit state of the loop.

## Claims

1. A system comprising a multi-port strap device (100) and a sewing needle for sewing a label carrying the multi-strap device (100) into a garment,
wherein the sewing needle is configured to perform the sewing by punching a series of holes for the stitches to pass through, at intervals,
wherein the multi-strap device (100) comprises:
a chip (106) having a first port (102) for coupling to an antenna (402) and a secondary port (104) configured to determine an open or closed circuit state, and
a pair of extended port pads (110) connected to the secondary port (104) that provide anti-tamper functions for the strap device (100),
wherein one extended port pad (110) is positioned on either side of the secondary port (104),
wherein the extended port pads (110) are separate from an antenna area (500), such that a cut through the secondary port (104) and/or extended port pads (110) does not damage or disable the antenna (402),
wherein the antenna area (500) comprises the antenna (402),
wherein a cut through the extended port pads (110) or the secondary port (104) will change the state of the secondary port (104), and
wherein the system is **characterized in that**
the secondary port (104) is in a closed circuit state due to a structure of the multi-port strap device (100) when the device (100) is not being tampered with,
the secondary port (104) and the extended port pads (110) are configured in such a manner that a cut through the pair of extended port pads (110) of the secondary port (104) causes the secondary port (104) to be in an open circuit state, and
wide areas of the extended port pads (110) prevent the state of the secondary port (104) from changing when the device (100) is being sewed into a garment by the sewing needle, and no combination of holes, regardless of how the holes are registered to the pads at said intervals, can change the state of the secondary port (104).

2. The multi-port strap device (100) of claim 1, wherein the secondary port (104) has a larger area than the first port (102).

3. The multi-port strap device (100) of claim 1 or 2, further comprising a protective layer for protecting the multi-port strap device (100).

## Patentansprüche

1. System, umfassend eine Multiport-Strap-Vorrichtung (100) und eine Nähnadel zum Einnähen eines Etiketts, das die Multi-Strap-Vorrichtung (100) trägt, in ein Kleidungsstück,
wobei die Nähnadel konfiguriert ist, um das Einnähen darüber durchzuführen, dass eine Reihe von Löchern, durch die die Stiche hindurchgehen, in Abständen gestanzt werden,
wobei die Multi-Strap-Vorrichtung (100) umfasst:
einen Chip (106), der einen ersten Port (102) zum Koppeln mit einer Antenne (402) und einen sekundären Port (104) aufweist, der konfiguriert ist, um einen offenen oder geschlossenen Stromkreiszustand zu bestimmen, und
ein Paar erweiterter Portpads (110), die mit dem sekundären Port (104) verbunden sind, die der Strap-Vorrichtung (100) Manipulationssicherungsfunktionen bereitstellen,
wobei auf beiden Seiten des sekundären Ports (104) ein erweitertes Portpad (110) positioniert ist,
wobei die erweiterten Portpads (110) von einer Antennenfläche (500) derart getrennt sind, dass ein Schnitt durch den sekundären Port (104) und/oder die erweiterten Portpads (110) die Antenne (402) nicht beschädigt oder unbrauchbar macht,
wobei die Antennenfläche (500) die Antenne (402) umfasst,
wobei ein Schnitt durch die erweiterten Portpads (110) oder den sekundären Port (104) den Zustand des sekundären Ports (104) ändert und
wobei das System **dadurch gekennzeichnet ist, dass**
sich der sekundäre Port (104) aufgrund einer Struktur der Multiport-Strap-Vorrichtung (100) in einem Zustand mit geschlossenem Kreislauf befindet, wenn die Vorrichtung (100) nicht manipuliert wird,
der sekundäre Port (104) und die erweiterten Portpads (110) in einer derartigen Weise konfiguriert sind, dass ein Schnitt durch das Paar erweiterter Portpads (110) des sekundären Ports (104) dazu führt, dass sich der sekundäre Port (104) in einem Zustand mit offenem Kreislauf befindet, und
breite Flächen der erweiterten Portpads (110) verhindern, dass sich der Zustand des sekundären Port (104) ändert, wenn die Vorrichtung (100) über die Nähnadel in ein Kleidungsstück eingenäht wird, und keine Lochkombination, unabhängig davon, wie die Löcher in den Abständen mit den Pads ausgerichtet sind, den Zustand des sekundären Anschlusses (104) ändern kann.

2. Multiport-Strap-Vorrichtung (100) nach Anspruch 1, wobei der sekundäre Port (104) eine größere Fläche als der erste Port (102) aufweist.

3. Multiport-Strap-Vorrichtung (100) nach Anspruch 1 oder 2, ferner umfassend eine Schutzschicht zum Schützen der Multiport-Strap-Vorrichtung (100).

## Revendications

1. Système comprenant un dispositif à interposeur multiport (100) et une aiguille à coudre pour coudre une étiquette portant le dispositif multi-interposeur (100) dans un vêtement,
dans lequel l'aiguille à coudre est conçue pour effectuer la couture en perçant une série de trous par lesquels les points passent, à intervalles,
dans lequel le dispositif multi-interposeur (100) comprend :
une puce (106) ayant un premier port (102) pour le couplage à une antenne (402) et un port secondaire (104) configuré pour déterminer un état de circuit ouvert ou fermé, et
une paire de plaquettes à ports étendues (110) connectées au port secondaire (104) qui fournissent des fonctions anti-altération pour le dispositif à interposeur (100),
dans lequel une plaquette à ports étendue (110) est positionnée de part et d'autre du port secondaire (104),
dans lequel les plaquettes à ports étendues (110) sont séparées d'une zone d'antenne (500), de sorte qu'une coupure à travers le port secondaire (104) et/ou les plaquettes à ports étendues (110) n'endommage pas ou ne met pas hors service l'antenne (402),
dans lequel la zone d'antenne (500) comprend l'antenne (402),
dans lequel une coupure à travers les plaquettes à ports étendues (110) ou le port secondaire (104) modifiera l'état du port secondaire (104), et
dans lequel le système est **caractérisé en ce que**
le port secondaire (104) est dans un état de circuit fermé en raison d'une structure du dispositif à interposeur multiport (100) lorsque le dispositif (100) n'est pas manipulé,
le port secondaire (104) et les plaquettes à ports étendues (110) sont configurés de telle sorte qu'une coupure à travers la paire de plaquettes à ports étendues (110) du port secondaire (104) entraîne le port secondaire (104) dans un état de circuit ouvert, et
de larges zones des plaquettes à ports étendues (110) empêchent l'état du port secondaire (104) de changer lorsque le dispositif (100) est cousu dans un vêtement par l'aiguille à coudre, et aucune combinaison de trous, quelle que soit la façon dont les trous sont effectués sur les plaquettes auxdites intervalles, ne peut changer l'état du port secondaire (104).

2. Dispositif à interposeur multiport (100) selon la revendication 1, dans lequel le port secondaire (104) a une surface plus grande que le premier port (102).

3. Dispositif à interposeur multiport (100) selon la revendication 1 ou 2, comprenant en outre une couche protectrice pour protéger le dispositif à interposeur multiport (100).
